# DEMANDE DE BREVET EUROPEEN

(11) **EP 2 037 598 A1**
(43) Date de publication de la demande: **18.03.2009**
(21) Numéro de dépôt: 08161109.7
(22) Date de dépôt: 24.07.2008
(51) Int. Cl.: H04B 10/18

(54) **Liaison optique et procédé de transmission de données**

(30) Priorité: 14.09.2007 FR 0757587
(71) Demandeur: Alcatel Lucent, 75008 Paris (FR)
(72) Inventeur: Charlet, Gabriel, 91190, VILLIERS-LE-BACLE (FR); Lefrancois, Mathieu, 91140, VILLEBON SUR YVETTE (FR)
(74) Mandataire: Thibaud, Jean-Baptiste

(57) **Abrégé**

Liaison optique comprenant une succession de blocs, chaque bloc comprenant une première série d'au moins un segment présentant une valeur de dispersion locale négative dans une bande spectrale, reliée à une seconde série d'au moins un segment présentant une valeur de dispersion locale positive dans ladite bande spectrale, caractérisée en ce que les blocs sont partitionnés en super blocs (9-11) comprenant chacun une succession d'au moins un bloc, lesdits super blocs (9-11) se succédant en alternant un super bloc (9-11) dans lequel chaque bloc dudit super bloc présente une valeur de dispersion cumulée positive, respectivement négative, dans ladite bande spectrale, avec un super bloc (9-11) dans lequel chaque bloc dudit super bloc présente une valeur de dispersion cumulée négative, respectivement positive, dans ladite bande spectrale.

## Description

La présente invention concerne une liaison optique pour un système de transmission et un procédé de transmission utilisant cette liaison optique.

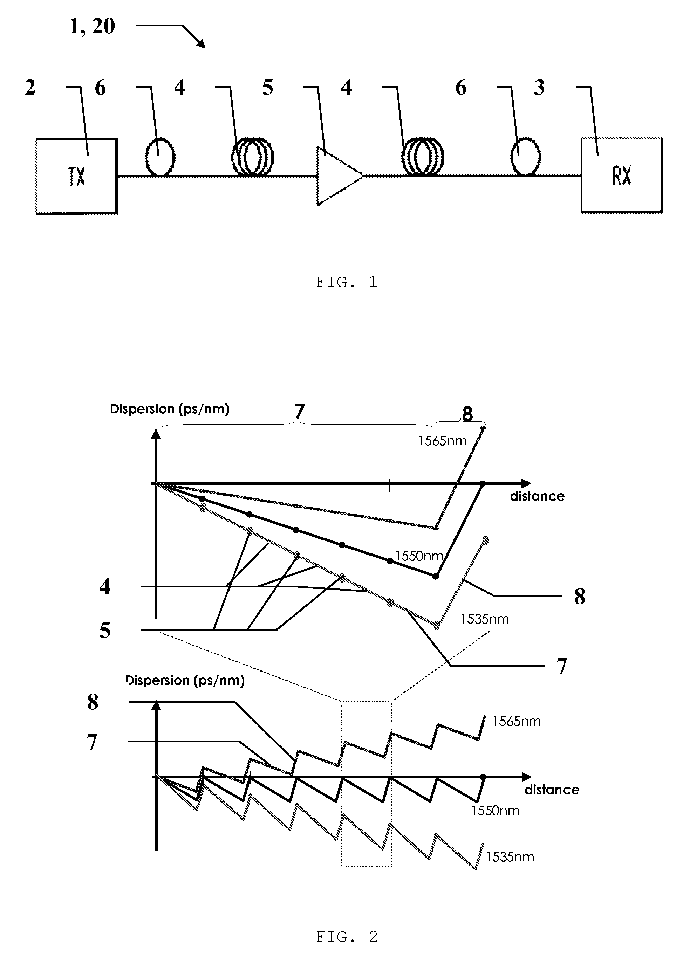

Dans le domaine des systèmes sous marins de transmission de données par câble, il est connu d'utiliser des fibres optiques. En se référant à la figure 1, un système de ce type transmet des données depuis un émetteur 2 à destination d'un récepteur 3, via une succession de segments 4, 6. Compte tenu de la grande distance, pouvant atteindre plusieurs milliers de km, pouvant séparer l'émetteur 2 du récepteur 3, des amplificateurs 5 sont régulièrement disposés le long de la ligne, par exemple entre les segments 4, 6, afin de régénérer le signal transmis, et plusieurs dizaines de segments 4, 6, peuvent être nécessaires.

Le document US 2004/208617 présente un système existant de ce type.

Les systèmes 1 sous marins de transmission emploient le plus souvent des segments 4 essentiellement constitués, de fibre optique d'un premier type : fibre à dispersion décalée non nulle, NZDSF (de l'anglais Non Zéro Dispersion Shifted Fiber). De telles fibres optiques, présentent, au centre d'une bande spectrale, une valeur de dispersion locale négative et une valeur de pente de dispersion locale positive. Le terme local s'applique au segment 4. La bande spectrale est typiquement centrée autour d'une longueur d'onde centrale λ₀ de 1550 nm pour des transmissions présentant un débit de 10Gb/s.

La dispersion chromatique dans une liaison optique doit être contrôlée afin de rester limitée le long de la liaison. Afin de compenser la dispersion induite par les segments NZDSF, il est intercalé entre les segments NZDSF, des segments 6 essentiellement constitués de fibre optique d'un second type : fibre standard monomode, SSMF (de l'anglais Standard Single Mode Fiber). De telles fibres optiques, présentent, au centre de ladite bande spectrale, une valeur de dispersion locale positive et une valeur de pente de dispersion locale positive.

La figure 2 illustre sur un réseau de courbes figurant la dispersion, en picoseeonde/nanomètre (ps/nm), en fonction de la distance (longueur de fibre), l'organisation d'une telle liaison optique 1. La partie inférieure de la figure 2 présente un graphe d'une liaison optique 1 complète dont un graphe de détail est figuré en partie supérieure. Les segments 4 se succèdent, séparés par des amplificateurs 5. La partie supérieure de la figure 2 illustre un bloc. Un bloc regroupe une première série 7 de segments 4 successifs du premier type NZDSF (présentant une valeur de dispersion locale négative), suivie d'une seconde série 8 de segments successifs du second type SSMF (présentant une valeur de dispersion locale positive). Dans l'exemple illustré, la première série comprend six segments NZDSF et la seconde série comprend un segment SSMF. Ces nombres sont indicatifs, mais garantissent, à la longueur d'onde centrale, ici de 1550 nm, comme le montre la courbe centrale, que la dispersion résultante s'annule sensiblement sur un bloc.

Il en résulte que, au voisinage de la fréquence centrale, la dispersion résiduelle est proche de zéro, à la sortie de chaque bloc. Ceci est particulièrement visible sur le graphe de la partie inférieure de la figure 2, pour la courbe centrale,

Les systèmes sous marins de transmission ont été historiquement, vers le milieu des années 1990, conçus pour être utilisés avec des formats de modulation OOK (de l'anglais On Off Keying) utilisant un retour au zéro RZ (de l'anglais Return to Zero). Ces formats de modulation présentent de meilleures performances dans la partie centrale du spectre de la liaison optique soit autour de la longueur d'onde centrale λ₀, typiquement égale à 1550 nm. Cette performance diminue avec l'accumulation de la dispersion, qui augmente, comme montré à la figure 2, à mesure que l'on s'éloigne de la longueur d'onde centrale λ₀ et que la distance augmente.

Un autre format de modulation, DPSK (de l'anglais Differential Phase Shift Keying) est de plus en plus utilisé. Ce format présente l'avantage de permettre un espacement plus faible des canaux, permettant ainsi d'augmenter le débit de transmission sur une même liaison optique 1.

Un inconvénient du format DPSK, est qu'il présente une faible tolérance aux non linéarités. Les non linéarités, qui renforcent l'impact du bruit de phase non linéaire, sont principalement causées par une faible dispersion cumulée. Une dispersion proche de zéro, telle qu'elle peut être observée sur une liaison optique 1, telle que décrite précédemment, comprenant une alternance de séries de segments à dispersion négative (par exemple NZDSF) et de séries de segments à dispersion positive (par exemple SSMF), principalement à la longueur d'onde centrale λ₀, est donc préjudiciable.

La présente invention remédie à ces différents inconvénients en proposant un arrangement de liaison optique réduisant les parties de la liaison optique présentant une dispersion résiduelle proche de zéro, permettant ainsi de réduire l'impact du bruit de phase non linéaire, par exemple en vue d'utiliser efficacement un format de modulation DPSK sur toute la bande de fréquence,

L'invention concerne une liaison optique comprenant une succession de blocs, chaque bloc comprenant une première série d'un ou plusieurs segments successifs présentant une valeur de dispersion locale négative dans une bande spectrale, reliée à une seconde série d'un ou de plusieurs segments successifs présentant une valeur de dispersion locale positive dans ladite bande spectrale, où les blocs sont partitionnés en super blocs comprenant chacun une succession d'au moins un bloc, lesdits super blocs se succédant en alternant un super bloc dans lequel chaque bloc dudit super bloc présente une valeur de dispersion cumulée positive, respectivement négative, dans ladite bande spectrale, avec un super bloc dans lequel chaque bloc dudit super bloc présente une valeur de dispersion cumulée négative, respectivement positive, dans ladite bande spectrale.

Selon des modes de réalisation particuliers de l'invention, la liaison optique peut comporter une ou plusieurs des caractéristiques suivantes: - un segment présentant une valeur de dispersion locale négative est réalisé avec une fibre décalée à dispersion non nulle, NZDSF, présentant une valeur de dispersion locale négative et une valeur de pente de dispersion locale positive,
- un segment présentant une valeur de dispersion locale positive est réalisé avec une fibre standard monomode, SSMF, présentant, une valeur de dispersion locale positive et une valeur de pente de dispersion locale positive,
- la liaison optique comprend entre 2 et 3 super blocs.

Une idée à la base de l'invention est de fournir une liaison optique dans laquelle, pour au moins une bande spectrale, le signe de la dispersion chromatique cumulée sur chacun des blocs d'un super bloc, s'inverse entre un super bloc et le super bloc suivant. Dans la bande spectrale pour laquelle cette propriété de dispersion est réalisée, il est possible d'obtenir une dispersion chromatique cumulée qui ne prenne un valeur nulle ou quasi nulle que sur une faible proportion de la liaison et qui reste toutefois dans un intervalle relativement étroit autour de zéro. La bande spectrale pour laquelle cette propriété de dispersion est réalisée peut recouvrir tout ou partie de la bande de transmission de la liaison optique, notamment une portion centrale de cette bande de transmission.

L'invention concerne encore un procédé de transmission de données, au moyen d'une liaison optique selon l'un quelconque des modes de réalisation précédents, utilisant un format de modulation DPSK au moins dans ladite bande spectrale, ou encore sur tout le spectre de fréquence de la liaison optique.

Un avantage de la liaison optique selon un mode de réalisation particulier de l'invention est de permettre l'utilisation d'un format de modulation DPSK sur la totalité de la bande de fréquence.

Un autre avantage de la liaison optique selon un mode de réalisation particulier de l'invention est qu'elle reste compatible avec un format de modulation OOK sur la totalité du spectre ou avec un format hybride OOK/DPSK (OOK autour de la fréquence centrale au centre du spectre de fréquence, à proximité de la longueur d'onde centrale λ₀, et un format de modulation DPSK sur les bords du spectre de fréquence).

D'autres caractéristiques, détails et avantages de l'invention ressortiront plus clairement de la description détaillée donnée ci-après à titre indicatif en relation avec des dessins sur lesquels :
- la figure 1 (déjà décrite) représente schématiquement la structure d'une liaison optique typique de l'état de l'art ou selon l'invention,
- la figure 2 (déjà décrite) présente un graphe de dispersion d'une liaison optique NZDSF/SSMF selon l'art antérieur,
- la figure 3 présente un graphe de dispersion d'un bloc présentant une dispersion, cumulée négative,
- la figure 4 présente un graphe de dispersion d'un bloc présentant une dispersion cumulée positive,
- la figure 5 présente comparativement un graphe de dispersion d'une liaison optique selon un mode de réalisation de l'invention,
- les figures 6-11 présentent sur un graphe de dispersion, une liaison optique comportant 2 super blocs (Fig. 4-6) ou 3 super blocs (Fig. 7-9) à différentes fréquences,
- la figure 12 présente un graphe figurant le facteur de qualité Q d'une liaison optique selon un mode de réalisation de l'invention, en fonction de la fréquence et du nombre de super blocs.

En se référant à la figure 1, une liaison, optique 20 selon un mode de réalisation de l'invention comprend, entre un émetteur 2 et un récepteur 3, une succession de segments 4 ayant une dispersion locale négative, séparés par des amplificateurs 5, et des segments 6 ayant une dispersion locale positive. Bien qu'elle présente les mêmes éléments structurels que la liaison optique 1 de l'art antérieur, la liaison optique 20 diffère de celle-ci par la carte de dispersion, comme il sera expliqué plus bas.

Les segments 4 et 6 sont organisés en blocs. Chaque bloc comprend une première série 7 de segments 4 successifs présentant une valeur de dispersion locale négative dans une bande spectrale centrale, suivie d'une seconde série 8 de segments 6 successifs présentant une valeur de dispersion locale positive dans ladite bande spectrale centrale.

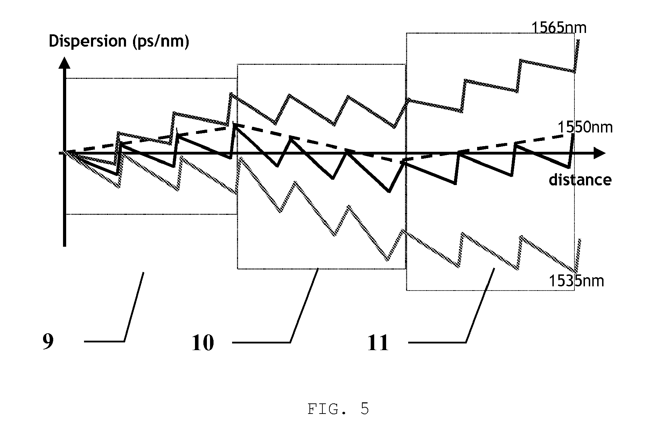

La caractéristique principale de la liaison 20, illustrée à la figure 5, sur un graphe de dispersion, est que les blocs successifs sont arrangés en super blocs 9-11, les super blocs réunissant un ou plusieurs blocs successifs selon une partition de l'ensemble des blocs (tout bloc appartient à un super bloc et un seul), lesdits super blocs se succédant en alternant le signe de la valeur de dispersion cumulée pour chacun des blocs d'un super bloc. Ainsi si dans les super blocs de rang pair, chaque bloc présente une valeur de dispersion cumulée positive, dans les super blocs de rang impair, chaque bloc présente une valeur de dispersion cumulée négative et réciproquement.

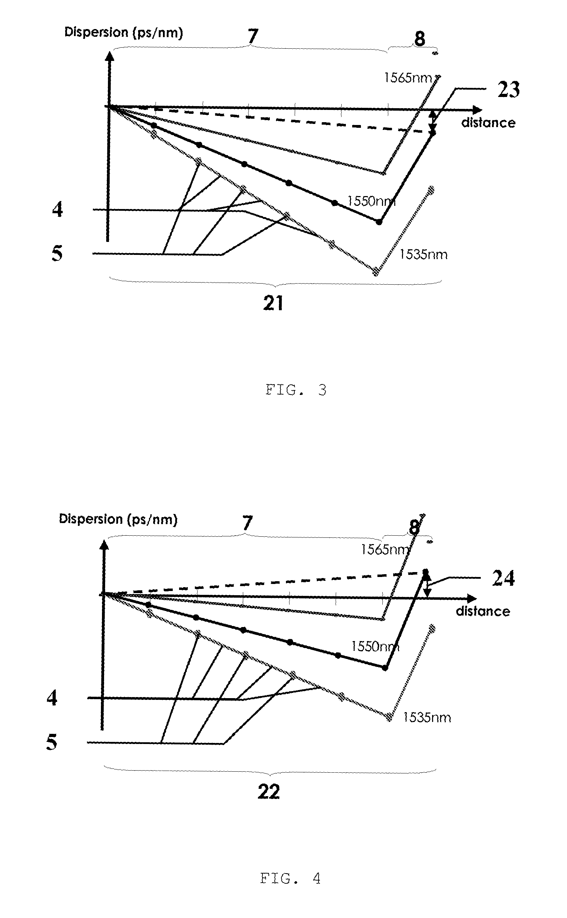

La figure 3 représente un graphe de dispersion d'un bloc 21 appartenant au super bloc 10 de la figure 5. Le nombre et la longueur des segments dans la série de segments 7 et la série de segments 8 sont purement illustratifs et non limitatifs. Le nombre et les positions des amplificateurs 5 sont purement illustratifs et non limitatifs. A la sortie du bloc 21, la dispersion chromatique cumulée dans la bande spectrale proche de 1550 nm (courbe centrale) présente une valeur négative non nulle, représentée par la flèche 23.

La figure 4 représente un graphe de dispersion d'un bloc 22 appartenant au super bloc 9 ou 11 de la figure 5. Le nombre et la longueur des segments dans la série de segments 7 et la série de segments 8 sont purement illustratifs et non limitatifs. Le nombre et les positions des amplificateurs 5 sont purement illustratifs et non limitatifs. A la sortie du bloc 22, la dispersion chromatique cumulée dans la bande spectrale proche de 1550 nm (courbe centrale) présente une valeur positive non nulle, représentée par la flèche 24,

De préférence, dans un bloc, le nombre d'amplificateurs peut être compris entre 5 et 12 et la distance entre amplificateurs peut être comprise entre 50km et 100km. Généralement, plus la liaison optique 20 est courte, plus la distance entre amplificateurs peut être allongée.

Le signe positif ou négatif de la valeur de dispersion cumulée sur un bloc est défini en référence à une bande spectrale, qui est de préférence une bande centrale autour de la longueur d'onde centrale λ₀, ici la courbe centrale, à 1550 nm. Ainsi la courbe centrale correspondant à la fréquence λ₀, voit sa pente globale, figurée en trait pointillé, sur la longueur d'un bloc, changer de signe alternativement, d'un super bloc au super bloc suivant. Ainsi sur la figure 3, figurant 3 super blocs 9-11, comprenant chacun 3 blocs, le premier super bloc 9 et le troisième super bloc 11 présentent une valeur de dispersion cumulée par bloc positive, tandis que le second super bloc 10 présente une valeur de dispersion cumulée par bloc négative.

La fréquence influant aussi sur la dispersion chromatique, cette influence étant généralement caractérisée par le paramètre pente de dispersion, il est possible que la propriété précédente ne soit pas vérifiée pour tous les super blocs, à toutes les longueurs d'onde. Ainsi, les blocs 21 et 22 représentés respectivement aux figures 3 et 4, correspondent au cas d'une pente de dispersion positive sur tous les segments. De ce fait, pour la longueur d'onde de 1535 nm, correspondant à la courbe inférieure, la dispersion cumulée est négative pour le bloc 21 et pour le bloc 22, alors que la dispersion cumulée est positive pour le bloc 21 et pour le bloc 22 à la longueur d'onde de 1565 nm correspondant à la courbe supérieure.

L'arrangement garantit cependant une répartition des dispersions cumulées qui limite les occurrences d'une dispersion proche de zéro au centre du spectre.

Dans le mode de réalisation ci-dessus, un bloc 21 ou 22 contient le ou les segments 4 à dispersion locale négative en amont du ou des segments 6 à dispersion locale positive. Toutefois, une configuration inverse est également possible. Tous les blocs n'ont pas nécessairement la même configuration à cet égard.

Pour régler la dispersion cumulée sur un bloc, il est possible de jouer sur différents paramètres, comme les nombres et les longueurs des segments 4 et 6. Les segments 6 à dispersion locale positive, aussi appelés compensateurs de dispersion peuvent être réalisés de différentes manières, par exemple au moyen de fibres monomodes, de fibres à compensation de dispersion ou encore de réseaux de diffraction. Des compensateurs 6 de dispersion peuvent être directement intégrés dans l'émetteur 2, le récepteur 3 ou l'un ou l'autre des amplificateurs 5.

Il est encore possible d'agir sur les longueurs respectives des segments présentant une valeur de dispersion négative ou des segments présentant une valeur de dispersion positive. Il est ainsi toujours possible de rallonger de quelques kilomètres un segment de fibre de quelques kilomètres « surnuméraires ». Ainsi pour obtenir un bloc présentant une dispersion cumulée positive à la longueur d'onde centrale λ₀ à partir d'une liaison optique 1 de l'art antérieur, il convient de rallonger au moins un des segments 6 présentant une valeur de dispersion positive appartenant à la seconde série 8 dudit bloc.

Pour réaliser une correction de dispersion cumulée sur un super bloc, il est procédé à une correction de dispersion cumulée, de même sens sur tous les blocs constitutifs dudit super bloc, au moins à la longueur d'onde centrale λ₀. Les corrections de dispersion cumulée appliquées aux différents blocs sont avantageusement identiques au sein d'un même super bloc.

La correction est déterminée relativement à la longueur d'onde centrale λ₀, mais peut aussi affecter tous les canaux, quelle que soit leur longueur d'onde, en fonction des propriétés de dispersion de la fibre.

Selon un mode de réalisation, un segment 4 présentant une valeur de dispersion locale négative est réalisé avec une fibre décalée à dispersion non nulle, NZDSF. Ce segment présente alors une valeur de dispersion locale négative et une valeur de pente de dispersion locale positive.

Selon un mode de réalisation, un segment 6 présentant une valeur de dispersion locale positive est réalisé avec une fibre standard monomode, SSMF. Ce segment présente alors une valeur de dispersion locale positive et une valeur de pente de dispersion locale positive.

Ceci correspond aux liaisons optiques historiques, qui peuvent ainsi avantageusement être réutilisées, lors de modernisations.

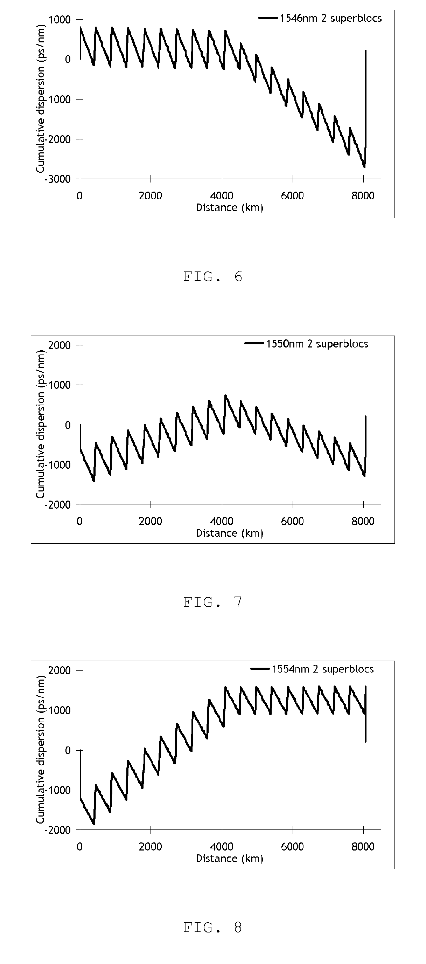

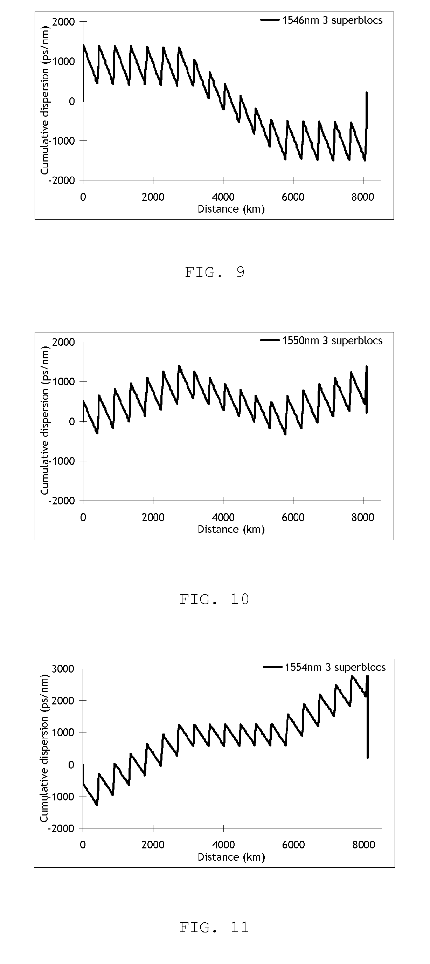

Les figures 6-11 présentent, sur un graphe de dispersion en fonction de la distance, une liaison optique comportant 2 super blocs (Fig. 6-8) ou 3 super blocs (Fig. 9-11) à différentes longueurs d'onde. Les figures 6 et 9 correspondent à une première longueur d'onde extrême de 1546 nm. Les figures 7 et 10 correspondent à une longueur d'onde centrale de 1550 nm. Les figures 8 et 11 correspondent à l'autre longueur d'onde extrême de 1554 nm.

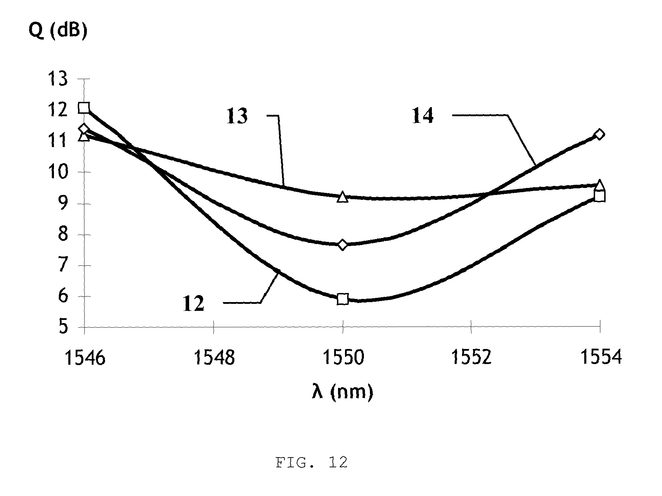

Compte tenu des longueurs que couvre classiquement une liaison optique sous marine, le nombre de super blocs est généralement compris entre 2 et 6 super blocs. La figure 12 illustre le gain apporté par l'invention. La figure 12 présente une courbe de facteur de qualité Q en fonction de la longueur d'onde λ, pour un format de modulation DPSK. L'exemple est basé sur une liaison optique 1 ou 20 comprenant 18 blocs pour une longueur totale de 8000km. Trois courbes 12-14 sont figurées. La courbe 12 correspond à une liaison optique 1 semblable à l'art antérieur. Il peut être observé une baisse de performance, avec un facteur de qualité Q faible, autour de la longueur d'onde centrale λ₀ de 1550 nm. La courbe 13 correspond à une liaison optique 20 avec 2 super blocs, et montre une importante amélioration, le minimum de Q augmentant nettement, y compris au niveau de la longueur d'onde centrale. La courbe 14 correspond à une liaison optique 20 avec 3 super blocs, et montre une importante amélioration, le minimum de Q augmentant encore nettement, y compris au niveau de la longueur d'onde centrale, mais encore sur tout le spectre. Un nombre supplémentaire de super blocs n'apporte pas d'amélioration sensible. Un résultat optimum est obtenu en utilisant entre 2 et 3 super blocs.

L'arrangement de liaison optique 20 s'avère ainsi particulièrement adapté à une transmission de données utilisant un format de modulation DPSK sur tout le spectre de fréquence de la liaison optique 20. D'autres formats peuvent aussi être utilisés, par exemple un format de modulation OOK ou un format hybride OOK/DPSK. Le format hybride emploie d'une part un format de modulation OOK au centre du spectre de fréquence, à proximité de la longueur d'onde centrale λ₀, et d'autre part un format de modulation DPSK sur les bords du spectre de fréquence.

## Revendications

1. Liaison optique (20) pour transmettre des signaux optiques ayant des longueurs d'onde appartenant à une bande de transmission, ladite liaison optique comprenant une succession de blocs, chaque bloc comprenant une première série (7) d'au moins un segment (4) présentant une valeur de dispersion locale négative dans une bande spectrale, reliée à une seconde série (8) d'au moins un segment (6) présentant une valeur de dispersion locale positive dans ladite bande spectrale, lesdits blocs étant partitionnés en super blocs (9-11) comprenant chacun une succession de plusieurs blocs, lesdits super blocs (9-11) se succédant en alternant un super bloc (9-11) dans lequel chaque bloc dudit super bloc présente une valeur de dispersion cumulée positive, respectivement négative, dans ladite bande spectrale, avec un super bloc (9-11) dans lequel chaque bloc dudit super bloc présente une valeur de dispersion cumulée négative, respectivement positive, dans ladite bande spectrale, **caractérisée en ce que** ladite bande spectrale recouvre une partie centrale de ladite bande de transmission de la liaison optique, ladite bande de transmission comportant en outre, de part et d'autre de ladite partie centrale, une première partie de bord comprenant une longueur d'onde pour laquelle les super blocs successifs présentent alternativement une valeur de dispersion cumulée nulle à chaque bloc et une valeur de dispersion cumulée négative à chaque bloc et une deuxième partie de bord comprenant une longueur d'onde pour laquelle les super blocs successifs présentent alternativement une valeur de dispersion cumulée positive à chaque bloc et une valeur de dispersion cumulée nulle à chaque bloc.

2. Liaison optique selon la revendication 1, où un segment (4) présentant une valeur de dispersion locale négative est réalisé avec une fibre décalée à dispersion non nulle, NZDSF, présentant une valeur de dispersion locale négative et une valeur de pente de dispersion locale positive.

3. Liaison optique selon la revendication 1 ou 2, où un segment (6) présentant une valeur de dispersion locale positive est réalisé avec une fibre standard monomode, SSMF, présentant une valeur de dispersion locale positive et une valeur de pente de dispersion locale positive.

4. Liaison optique selon l'une quelconque des revendications précédentes, comprenant entre 2 et 3 super blocs (9-11).

5. Liaison optique selon l'une quelconque des revendications précédentes, dans laquelle ladite première partie de bord de la bande de transmission comprend une longueur d'onde pour laquelle les blocs de tous les super blocs successifs présentent une valeur de dispersion cumulée négative à chaque bloc et ladite deuxième partie de bord comprend une longueur d'onde pour laquelle les blocs de tous les super blocs successifs présentent une valeur de dispersion cumulée positive à chaque bloc.

6. Procédé de transmission de données, au moyen d'une liaison optique (20) selon l'une quelconque des revendications précédentes, **caractérisé en ce qu'**il utilise un format de modulation DPSK dans ladite partie centrale de ladite bande de transmission.

7. Procédé selon la revendication 6, dans lequel on utilise un format de modulation DPSK dans toute ladite bande de transmission.
